**Europäisches Patentamt**

**European Patent Office**

**Office européen des brevets**

(19)

(11) Veröffentlichungsnummer : **0 231 004 B1**

# EUROPÄISCHE PATENTSCHRIFT

(12)

(45) Veröffentlichungstag der Patentschrift :
**10.07.91 Patentblatt 91/28**

(51) Int. Cl.$^5$ : **G01N 21/88**, G06F 15/70,
G01N 27/84

(21) Anmeldenummer : **87101001.3**

(22) Anmeldetag : **24.01.87**

(54) **Verfahren zur Selbstkontrolle einer optoelektronischen Risserkennungseinrichtung, insbesondere nach dem Magnetpulververfahren.**

Die Akte enthält technische Angaben, die nach dem Eingang der Anmeldung eingereicht wurden und die nicht in dieser Patentschrift enthalten sind.

(30) Priorität : **28.01.86 DE 3602395 U**
**29.03.86 DE 8608690 U**

(43) Veröffentlichungstag der Anmeldung :
**05.08.87 Patentblatt 87/32**

(45) Bekanntmachung des Hinweises auf die Patenterteilung :
**10.07.91 Patentblatt 91/28**

(84) Benannte Vertragsstaaten :
**ES FR GB IT SE**

(56) Entgegenhaltungen :
**DE-B- 2 837 746**

(56) Entgegenhaltungen :
US-A- 4 302 678
PATENT ABSTRACTS OF JAPAN, Band 7, Nr. 241 (P-232)[1386], 26. Oktober 1983; & JP-A-58 127 159 (NIPPON KOKAN K.K.) 28-07-1983
WELDING JOURNAL, Band 61, Nr. 2, Februar 1982, Seiten 28-31, Miami, Florida, US; R. SELNER: "Dye penetrant and magnetic particle inspection"

(73) Patentinhaber : **Tiede GmbH + Co**
**Rissprüfanlagen**
**Bahnhofstr. 94-98 Postfach**
**W-7087 Essingen (DE)**

(72) Erfinder : **Krautkrämer, Herbert Dr.rer.nat.**
**Friedensweg 10**
**W-5303 Merten (DE)**

(74) Vertreter : **Grave, Ivar Gerhard, Dipl.-Phys.**
**Aachener Strasse 321**
**W-5000 Köln 41 (DE)**

## Beschreibung

Verfahren zur Selbstkontrolle einer optoelektronischen Risserkennungseinrichtung, insbesondere nach dem Magnetpulververfahren und Vorrichtung zu seiner Ausführung.

Die Erfindung betrifft ein Verfahren zur Selbstkontrolle einer optoelektronischen Risserkennungseinrichtung bei der automatischen Prüfung von Werkstoffen, insbesondere nach dem Magnetpulververfahren, bei dem die Werkstücke auf Größe, Lage und-/oder Anzahl der Risse optoelektronisch sowie mit Hilfe eines Rechners geprüft werden und eine Vorrichtung zu seiner Ausführung.

Es ist bereits bekannt, Oberflächenfehler, wie Risse oder Lunker an Werkstücken mit Eindringmitteln (Penetriermitteln) oder mit Magnetpulvern sichtbar zu machen. Danach können die so sichtbar gemachten fehlerhaften Werkstücke vom Prüfpersonal aussortiert werden. Der Vorteil der Sichtprüfung besteht zwar darin, daß die Erfahrung des Prüfers mit in das Prüfergebnis eingeht. Allerdings ist diese Prüfarbeit recht monoton, wobei in der Regel der Prüfer stehend in einer Fabrikhalle odgl. in einer halbverdunkelten Kabine die auf dem Fließband nacheinander vorbeilaufenden, durch eine Magnetpulversuspension bespülten Werkstücke beobachten muß. Es treten Ermüdungserscheinungen auf, so daß er Fehlanzeigen übersehen kann. Außerdem schwankt das Prüfergebnis von Person zu Person. Ferner darf eine bestimmte Prüfgeschwindigkeit nicht überschritten werden mit der Folge, daß der Produktionsausstoß an Werkstücken verringert wird.

Zwar sind optoelektronisch arbeitende Risserkennungsgeräte vorgeschlagen worden, wobei ein Bildfeld beleuchtet wird, in dem das zu prüfende Werkstück liegt. Das Werkstück wird optisch erfaßt und danach elektronisch verarbeitet, z.B. durch eine Fernsehkamera. Das erzeugte Bild wird durch einen Rechner auf Anzeigen ausgewertet, die von den Oberflächenfehlern herrühren, wobei die Größe und Zahl der Fehler den Prüfungsmaßstab bildet. Im einzelnen besteht das Gerät aus einer oder mehreren Lichtquellen bzw. Leuchten, insbesondere UV-Leuchten, die das zu prüfende Werkstück für die Fernsehkamera ausleuchten, die das zugehörige Bild digital zur Auswertung an einen Rechner weitergibt. Der Rechner ist so programmiert, daß er die Fehleranzeigen nach Größe und Zahl "erkennt", d.h. innerhalb vorprogrammierter Annahme-Ablehnungsgrenzen erfassen kann und unabhängig von subjektiven Einflüssen ein oder mehrere Bewertungssignale abgibt. Mit anderen Worten ist der Rechner nach Größe und Zahl der Fehleranzeigen, je nach Prüfproblem bzw. unterschiedlichen Werkstücken, voreinstellbar. Im nachfolgenden wird die ausgeleuchtete und von der Kamera erfaßte Fläche als Bildfeld und die Fläche des Bildfeldes, die der auswertende Rechner auf Fehleranzeigen erfaßt, als Prüffeld bezeichnet. Das Prüffeld ist somit kleiner oder im Einzelfall gleich groß wie das Bildfeld.

Derartige Geräte müssen sehr zuverlässig arbeiten. Deshalb ist es weiter bekannt, die Funktionssicherheit des Gerätes, (auch fail-safe genannt) dadurch sicherzustellen, daß der Rechner Störung meldet, wenn eine Blitzlampe oder die Kamera selbst ausfällt ; der Rechner meldet ebenfalls eine Störung, wenn ein Fremdkörper zwischen die Leuchten und die Prüffläche gelangt oder eine Leuchte ausfällt oder seine Beleuchtungsintensität unter zulässiges Maß absinkt. Dies betrifft allerdings die Komponentenprüfung des Gerätes.

Ferner wird die Selbstkontrolle des Rechners noch dadurch erhöht, daß er auch dann eine Störung meldet, wenn er einen Fehler nicht identifizieren kann, z.B. durch ein Farbsignal "gelb". Allerdings sind hier die Bewertungsparameter bei der Anfangsjustierung des Gerätes so einzustellen, daß dieser Zustand nicht zu oft eintritt und nicht übermäßig viele Werkstücke als "unklar" aussortiert werden.

Ebenfalls ist vorgeschlagen worden, den Rechner einer optoelektronischen Anlage so einzustellen, daß er eine Störung meldet, wenn er erkennt, daß die Fehlererwartungsgrenze überschritten ist, er also mehr Fehler als maximal voreingestellt erkennt. Dies gilt sinngemäß für eine Einstellung auf minimale Fehleranzahl, minimale Fehlerlänge und maximale Fehlerlänge. Zwar sind hier die maximalen bzw. minimalen Vorgabewerte vom Prüfproblem bzw. von einem bestimmten Werkstück her vorgegeben und dann dem Rechner einprogrammiert, aber danach bleibt die Selbstkontrolle nur gerätespezifisch, d.h. er erhält von den laufend unterschiedlichen Werkstücken keine evtl. notwendigen Korrekturwerte mehr.

Ferner sind ein Verfahren und eine Vorrichtung bekannt (D1 = US-A-4302678), wobei Oberflächenfehler bei Werkstücken mit Ultraviolett-Licht geprüft werden, indem ein Standardprüfstück zum Justieren verwendet wird. Letzteres weist eine Vielzahl von künstlichen Oberflächenrissen auf, auf welche ein UV-Lichtbündel ausgerichtet, hier gestreut, die fluoreszierende Strahlung einem elektronischen Detektor zugeführt und in einem nachfolgenden Gerät angezeigt wird. Allerdings ist die Verteilung der Risse des Justiermusters willkürlich und nicht natürlichen Werkstückrissen oder -fehlern entsprechend ausgebildet. Eine Fernsehkamera, verbunden mit einem Rechner, kommt nicht zur Anwendung. Somit ist die sehr schnelle bzw. momentane Beurteilung der Funktionstüchtigkeit der gesamten optoelektronischen Risserkennungseinrichtung, d.h. ihre optimale Selbstkontrolle, nur beschränkt möglich und schließt Fehlbeurteilungen im kontinuierlichen Arbeitsbetrieb nicht aus. Auch ist der bekannte, aus Kupfer oder Messing bestehende ringscheibenförmige Justierkörper, verbunden mit einem speziellen Glasröhrchen vornehmlich für den Einsatz bei hohen Temperaturen bestimmt.

Bei einem bekannten Verfahren und einer Vorrichtung zur zerstörungsfreien Werkstoffprüfung nach dem Magnetpulververfahren (D2 = Patent Abstracts of Japan, Band 7, Nr. 241, (P-232)(1386), 26. Oktober 1983 : & JP-A- 58 127159) wird eine Fehlernormale auf einer Materialplatte aus gleichem Werkstoff wie der jeweilige Prüfling in Form eines künstlichen Risses und einer Fehlerstelle hergestellt. Der Testkörper wird an der Materialplatte befestigt. Der Fehler hat eine ähnliche Form wie ein natürlicher zu prüfender Fehler. Die Befestigung des Testkörpers soll durch Schweißen erfolgen. Es wird aber keine optoelektronische Rißerkennungsvorrichtung und folglich kein Mittel zur Selbstkontrolle der letzteren vorgeschlagen. Die bekannte Ausführung ist nicht für die automatische schnell erfolgende Betriebsprüfung, sondern für den Dauerfestigkeits- bzw. Ermüdungstest geeignet.

Hier will die Erfindung Abhilfe schaffen. Die Erfindung, so wie sie in den Ansprüchen gekennzeichnet ist, löst die Aufgabe, die Qualität der Selbstprüfung bei optoelektronischen Rißprüfgeräten zu erhöhen, so daß bei einem Ausfall udgl. des Gerätes dieses sofort stillgelegt udgl. werden kann. Vorteilhafte Ausgestaltungen sind in den Unteransprüchen dargestellt. Die durch die Erfindung erreichten Vorteile sind im wesentlichen darin zu sehen, daß nicht die Funktion der einzelnen Gerätekomponenten auf störungsfreien Betrieb geprüft wird, sondern die Gesamtfunktion des Prüfsystems. Die Sicherheit der Selbstprüfung wird auch dadurch erhöht, daß man vorteilhaft die bei dem optoelektronischen Gerät mögliche schnelle, trägheitsarme Prüffolge ausnutzt, um diese Prüfung schon nach jedem Prüfstückwechsel auszuführen, die optoelektronische Risserkennungseinrichtung somit auf ihre Funktionsfähigkeit und die richtige Einstellung zu kontrollieren. Zur Prüfung der Einrichtung wird vorteilhaft ein nicht gerätespezifischer sondern geräteunabhängiger Parameter in Form eines künstlichen, d.h. nachgebildeten Fehlers, einer Gruppe von Fehlern bzw. eines Fehlerbildes, herangezogen. Hierbei braucht die Transportgeschwindigkeit der Werkstücke nicht verringert zu werden bzw. andere für das optoelektronische Erkennungsverfahren vorteilhafte Eigenschaften werden nicht eingeschränkt.

Die Erfindung kann so ausgestaltet werden, daß das Einblenden von nachgebildeten Fehlern durch Einlegen eines Kontrollprüfstückes erfolgt, das mit den nachgebildeten Fehlern versehen ist. Das Kontrollprüfstück durchläuft den gesamten Magnetpulverprüfzyklus, kehrt in die Anfangslage zurück und läuft mit dem nächsten Zyklus weiter und so fort. Somit wird der gesamte Prüfvorgang ständig überwacht. Eine Erfindungsvariante sieht vor, daß die nachgebildeten Fehler ihrer Lage und Größe nach auf einer Grundplatte bzw. Werkstückaufnahme angebracht werden, die üblicherweise die Werkstücke aufnimmt. Wird das Werkstück ausgewechselt, wird der nachgebildete Fehler auf der Aufnahme bzw. Grundplatte sichtbar, von dem optoelektronischen Gerät aufgenommen und zur Selbstkontrolle verwertet. Das Erkennungsergebnis dieser nachgebildeten Fehler kann dazu benutzt werden, die nächste bzw. auch die vorletzte Prüfung freizugeben oder, bei Nichterkennen der nachgebildeten Fehler, die Anlage stillzusetzen.

Gemäß einer weiteren Ausgestaltung ist vorgesehen, die nachgebildeten Fehler in den Ecken bzw. Eckbereichen des Prüffeldes des Rechners anzuordnen. Damit wird kontrolliert, ob die Beleuchtung und die Aufnahme des Kameraabbildefeldes in Ordnung sind.

Ferner ist vorteilhaft, die Größe, Länge und/oder die Zahl der nachgebildeten Fehler derart einzustellen, daß eine bzw. je eine vorbestimmte Funktion des Risserkennungssystems kontrolliert werden kann. Dies kann vorteilhaft durch verschiebbare Blenden odgl. geschehen, um die Anpassungsfähigkeit bei wechselndem Prüfproblem leicht und mit kleinem Geräteaufwand zu ermöglichen.

Im folgenden wird die Erfindung anhand von lediglich einen Ausführungsweg darstellenden Zeichnungen erläutert.

Es zeigt :

Fig. 1 in perspektivischer Darstellung einer Vorrichtung zur Selbstkontrolle mit einer Risserkennungseinrichtung und zwei Werkstücken, neben welchen die Kontrollprüfstücke angeordnet sind.

Fig. 2 eine der Fig. 1 entsprechende perspektivische Darstellung, wobei jedoch ein Kontrollprüfstück mit Fehler-Konturbauteilen ein Werkstück selbst ist.

Fig. 3 verschiedene Ausführungsformen der Kontrollprüfstücke mit Konturbauteilen auf einem zugehörigen Trägerbauteil, z.B. einer dünnen Kunststofffolie.

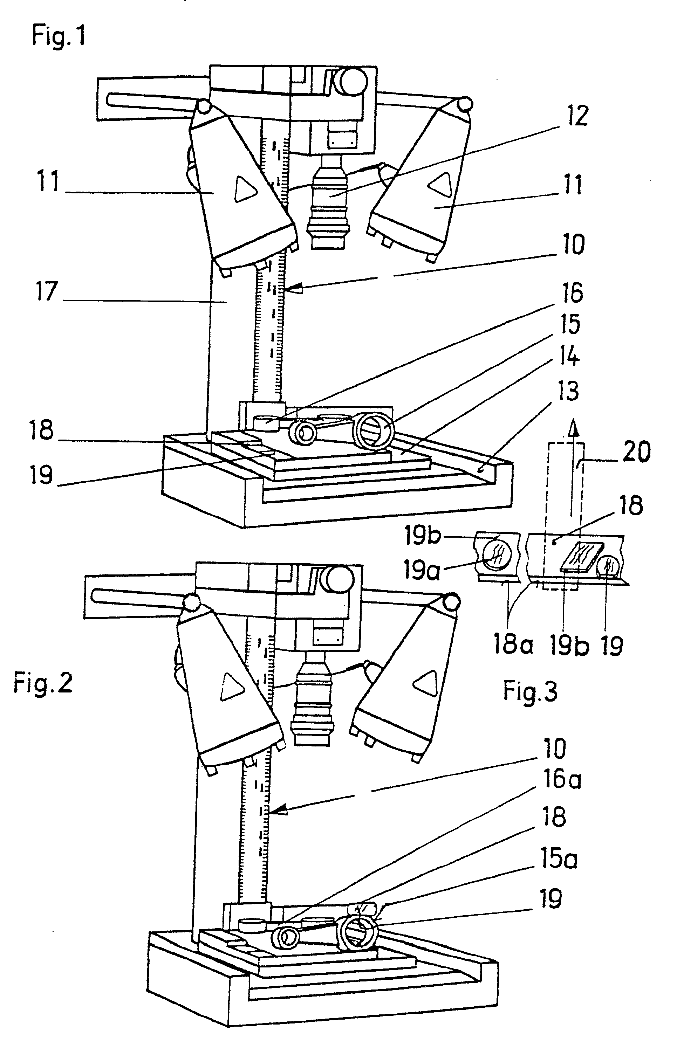

Die einzeln für sich bekannte Risserkennungseinrichtung 10 besteht au einem Stativ, einer oder mehreren Lampen oder Leuchten 11 zur Ausleuchtung des Bildfeldes und einer oder mehreren Fernsehkameras 12, wobei letztere mit einem Rechner in Verbindung stehen. Die eigentliche Vorrichtung zur Selbstkontrolle der Risserkennungseinrichtung 10 besteht gemäß der Ausführungsform Fig. 1 aus der Vereinigung einer Werkstückaufnahme odgl. 13, insbesondere einer Grundplatte 14, mit mindestens einem Fehler-Konturbauteil. Das Fehler-Konturbauteil ist Werkstückrissen oder Werkstückfehlern entsprechend räumlich oder flächenhaft nachgebildet. Vorteilhaft besteht das Konturbauteil aus einem Trägerbauteil, z.B. einer Folie insbesondere aus Kunststoff. Ferner gehört zum Konturbauteil das räumlich oder flächenhaft künstlich nachgebildete Fehlerelement 19 bzw. 19a, vgl. Figur 3. Die Fehlerelemente können je nach Prüfproblem in Verstellrichtung des Werkstückes, quer dazu, diagonal dazu odgl., ausgerichtet sein. Die Fehlerelemente, vgl. Figur 3, können ihrerseits auf einem Trägerplättchen odgl. 19b angeordnet bzw. mit letzterem verbunden sein und werden dann auf die eigentliche Trägerfolie 18, 18a odgl. aufgebracht, z.B. angekittet udgl. Das Trägerbauteil kann eben oder gekrümmt, flächenhaft ausgebildet oder auch selbst mit räumlichen Konturen versehen sein. Die Fehlerelemente 19, 19a sind in der Regel räumlicher, Oberflächenrissen entsprechender Kontur. Bei der Ausführungsform gemäß Figur 2 sind die Fehler-Konturbauteile, also Fehlerlemente 19 und Trägerbauteil, z.B. Trägerfolie 18, unmittelbar auf einem oder mehreren Werkstücken 15a, 16a angeordnet, z.B. angeklebt odgl. Hierbei handelt es sich um Kontrollwerkstücke.

Die Erfindung sieht also vor, daß das Einblenden von künstlich nachgebildeten Fehler-Konturbauteilen 18, 18a, 19, 19a eines Kontrollprüfstückes 15a, 16a erfolgt. Das Kontrollprüfstück 15a, 16a durchläuft den gesamten Magnetpulverprüfzyklus, kehrt in die Anfangslage zurück und läuft mit dem nächsten Zyklus weiter, und so fort. Somit wird der gesamte Prüfvorgang ständig überwscht. Eine Variante sieht vor, daß die künstlich nachbegildeten Fehler-Konturbauteile ihrer Lage und Größe nach auf einer Grundplatte 14 bzw. Werkstückaufnahme 13 angebracht werden, die üblicherweise die Werkstücke 15, 16 aufnimmt. Wird das Werkstück 15 bzw. 16 ausgewechselt, wird das Fehler-Konturbauteil 18, 19 auf der Aufnahme bzw. Grundplatte 14 sichtbar, von dem optoelektronischen Gerät 10 aufgenommen und zur Selbstkontrolle verwertet. Das Erkennungsergebnis dieser Fehler-Konturbauteile kann dazu benutzt werden, die nächste bzw. auch die vorletzte Prüfung freizugeben oder bei Nichterkonnen des nachgebildeten Fehler-Konturbauteils 18 etc., die Anlage 10 stillzusetzen.

Um eine vorbestimmte Funktion des Risserkennungssystems zu kontrollieren, können vorteilhaft verschiebbare Blenden 20 odgl., vgl. Fig. 3, vorhanden sein, um die Anpassungsfähigkeit bei wechselndem Prüfproblem leicht und mit kleinem Geräteaufwand zu ermöglichen. Hierdurch wird über die Beurteilung der Fehlergröße udgl. in sicherer Weise möglich, die Funktionstüchtigkeit der Einrichtung 10 zu kontrollieren.

Gestattet der zum Auswerten eingesetzte Rechner nicht nur eine Größenbeurteilung, sondern auch eine Zählung der Fehleranzeigen, so ist gemäß weiterer Ausgestaltung zweckmäßig, eine vorbestimmte Zahl von nachgebildeten Fehlern vorzusehen, die vom Rechner gezählt werden, um nach dem Zählergebnis zu bestimmen, ob die Funktionstüchtigkeit oder optoelektronischen Einrichtung gegeben ist, oder nicht. Gemäß weiterer Ausgestaltung wird die Aufgabe gelöst, eine gleichmäßige Flächenempfindlichkeit des Prüffeldes dadurch zu kontrollieren und hierbei auch die Rand- und Mittelzonen des Prüffeldes auf gleichmäßige Empfindlichkeit zu erfassen, indem ein vorbestimmt eingestellter zulässiger (maximale bzw. minimale und werkstück- bzw. prüfproblem-bezogene) Fehlerwert während des Kontrollvorgangs erhöht wird, der dem Zahlenwert für eine Flächenkontrolle notwendigen Anzahl von nachgebilteten Fehlern der Fehler-Konturbauteile 18, 19, 18a, 19a, entspricht die in das Prüffeld des Rechners während des Kontrollvorgangs eingebracht worden sind. Für einen neuen Kontrollzyklus wird dieser Fehlerwert für den Rechner umgestellt.

Eine weitere Ausgestaltung des Verfahrens besteht darin, daß die Fehler-Konturbauteile 18, etc. nicht während des Prüfstückwechsels eingeführt werden, sondern während des eigentlichen Prüfvorgangs selbst. Dies kann dadurch erfolgen, daß die Fehler-Konturbauteile bzw. nachgebildeten Fehler an geeigneten vorbestimmten Stellen des Prüffeldes angebracht werden sowie zugleich die Mindestzahl der Fehleranzeigen um die Zahl der nachgebildeten Fehler erhöht wird. Diese Anordnung ist besonders vorteilhaft dann, wenn durchlaufende (also nicht auswechselbare) Werkstücke, insbesondere Schweißnähte, geprüft werden bzw. bei denen ein Prüfstückwechsel relativ selten ist.

## Patentansprüche

1. Verfahren zur Selbstkontrolle einer optoelektronischen Rißerkennungseinrichtung bei der automatischen Prüfung von Werkstoffen, bei dem die Werkstücke auf Größe, Lage und/oder Anzahl der Risse optoelektronisch geprüft werden, wobei zwischen einzelnen oder jeweils allen Prüfvorgängen die optoelektronischen Arbeitswerte einer Rißabbildung auf einem Kontroll-Aufnahmebauteil mit vorbestimmten Arbeits-Prüfwerten der Rißerkennungsvorrichtung verglichen werden, wobei ein oder mehrere künstlich nachgebildete, auf dem Aufnahmebauteil aufgebrachte Fehler vorbestimmter, von der erforderlichen Prüfempfindlichkeit abhängiger Fehlergröße einer Werkstückaufnahme (13) zugeführt werden, optoelektronisch geprüft und die Prüfwerte der nachgebildeten Fehler beurteilt werden, dadurch gekennzeichnet, daß die künstlichen Fehler den Werkstückrissen- oder fehlern entsprechend nachgebildet sind, wobei die Fehler entweder als Fehlerbilder optisch abgebildet oder auf den als Kontrollprüfstücke dienenden Aufnahmebauteilen ausgebildet sind, diese künstlichen Fehler in die Nähe der zu prüfenden Werkstücke gebracht werden und die momentane Funktionstüchtigkeit der optoelektronischen Einrichtung, ihres Rechners und ihrer Fernsehkamera beurteilt wird.

2. Verfahren nach Anspruch 1, dadurch gekennzeichnet, daß die künstlich nachgebildeten Fehler auf ihren Aufnahmebauteilen durch den gesamten Zyklus der jeweiligen Magnetpulverprüfung bzw. der Penetrierprüfung geführt werden, wobei bei letzterer die Werkstückoberfläche mit einer Farbflüssigkeit besprüht wird.

3. Verfahren nach Anspruch 1, dadurch gekennzeichnet, daß die nachgebildeten Fehler in den Eckbereichen des Prüffeldes des Rechners untergebracht werden, wobei das Prüffeld einem vom Rechner erfassten Teil des Kamerabildfeldes entspricht.

4. Verfahren nach Anspruch 2 und 3, dadurch gekennzeichnet, daß die nachgebildeten Fehler an einem als eine Grundplatte für die Werkstücke ausgebildeten Aufnahmebauteil angebracht werden.

5. Verfahren nach einem der Ansprüche 1-4, dadurch gekennzeichnet, daß je Kontrollzyklus ein vorbestimmt eingestellter Fehlerwert am Rechner auf einen anderen Wert der Fehleranzeige umgestellt wird, der dem Zahlenwert der für eine Flächenkontrolle notwendigen Anzahl von nachgebildeten Fehlern entspricht, so daß alle Zonen des Prüffeldes, einschließlich der Rand- und Mittelzonen, auf gleichmäßige Empfindlichkeit kontrolliert werden.

6. Verfahren nach einem der Ansprüche 1, 2, 3 oder 4, für relativ selten erfolgenden Wechsel der Kontroll-Prüfstücke bzw. für kontinuierlich durchlaufende Werkstücke, dadurch gekennzeichnet, daß die nachgebildeten Fehler innerhalb des Rechner-Prüffeldes selbst angeordnet werden und die Einstellung der Mindestfehlerzahl um die Zahl der nachgebildeten Fehler erhöht wird.

7. Verfahren nach einem der Ansprüche 1-6, insbesondere Anspruch 2, dadurch gekennzeichnet, daß die Kontroll-Prüfstücke vor dem Zurückführen in den Penetrier- bzw. Magnetpulverprüfvorgang zur Beseitigung der Fehleranzeigen des vorgenannten Prüfvorganges behandelt bzw. abgebürstet werden.

8. Verfahren nach Anspruch 1, dadurch gekennzeichnet, daß durch Verschieben von Blenden (20) die Größe, Länge und/oder die Zahl der nachgebildeten Fehler eingestellt werden.

## Claims

1. Method for the self-monitoring of an opto-electronic crack detection device when automatically testing material, in which the workpieces will be opto-electronically tested in respect to the size, position and/or number of cracks, whereat the opto-electronic working data of a crack image upon a control receiver part will be compared with predetermined working test values of the crack detection device between each single or all testing steps, whereat one or more artificially reproduced defects, applied upon the receiver part and having predetermined defect value which value depends from the necessary sensivity of testing, will be feeded to a workpiece receiver (13), tested opto-electronically and the test values of the reproduced defects will be evaluated, characterized in that the artificial defects are reproduced according to the cracks or defects of the workpieces, whereat either the defects will be optically formed ad defect images or will be formed upon the receiver parts used as control workpieces, that said artificial defects will be brought in the neighbourhodd of the workpieces to be tested and the instantaneous functional reliability of the opto-electronic device, of its computer and of its television camera will be evaluated.

2. Method according to claim 1, characterized in that the artificially reproduced defects, positioned on their receiver parts, will be guided through the whole cycle of each magnet powder testing and penetration testing, respectively, whereat in the last case the surface of the test piece will sprayed with a colour liquid.

3. Method according to claim 1, characterized in that the artificially reproduced defects are positioned in the corner areas of the testing field of the computer, whereat the testing field corresponds to a portion of the camera image field, embraced from the computer.

4. Method according to claim 2 and 3, characterized in that the artificially reproduced defects are provided on a receiver part, formed as a base plate for the workpieces.

5. Method according to one of claims 1-4, characterized in that in each control cycle a predetermined adjusted defect value in the computer will be readjusted to be a different value of the defect reading, which value corresponds to the necessary numerical value of artificially reproduced defects, needed for an area control such that all zones of the testing field, including the edge zones and the middle zones will, be controlled in respect to uniform sensivity.

6. Method according to one of claims 1, 2, 3 or 4 for control testing pieces which will be changed comparatively rarely and for continuously transported workpieces, respectively, characterized in that the artificially reproduced defects will be arranged just within the testing field of the computer and that the adjustment of the minimum number of defects will be decreased for the number of the reproduced defects.

7. Method according to one of the claims 1-6, especially according claim 2, characterized in that the control testing pieces, before they are feeded back into the penetration or magnet powder testing process will be submitted to treatment or will be brushed in order to remove the defect readings of the above mentioned testing step.

8. Method according to claim 1, characterized in that the size, length and/or the number of the reproduced defects will be adjusted on behalf of shifting of screens (20).

## Revendications

1. Procédé d'auto-contrôle d'un dispositif de détection de fissures opto-électronique utilisé en essais automatiques de matériaux, dans lequel les pièces sont contrôlées par voie opto-électronique du point de vue taille, position, et/ou nombre de fissures ; entre chacun de tous les processus d'essais, ou des processus d'essais séparés, les valeurs opto-électroniques d'une image de fissure sont comparées à un organe récepteur de contrôle avec des valeurs d'essais, déterminées à l'avance, du dispositif de détection de fissure ; un ou plusieurs défauts artificiellement reproduits, appliqués sur l'organe récepteur, et de valeur prédéterminée,—cette valeur dépendant de la sensibilité nécessaire du contrôle—, sont appliqués à un récepteur des pièces (13), sont testés par voie opto-électronique, et les valeurs de contrôle des défauts reproduits sont évaluées, caractérisé en ce que les défauts artificiels sont reproduits selon les fissures ou les défauts des pièces, que les défauts sont reproduits par voie optique, soit en tant qu'images des défauts, ou bien sont formés sur les récepteurs utilisés en tant que pièces d'essais de contrôle, que ces défauts artificiels sont placés à proximité des pièces à contrôler, et que la capacité fonctionnelle instantanée du dispositif opto-électronique, de son ordinateur, et de sa caméra de télévision sont évalués.

2. Procédé selon la revendication 1, caractérisé en ce que les défauts reproduits de façon artificielle, positionnés sur leur récepteur, sont guidés à travers le cycle complet de chaque contrôle de poudre magnétique ou respectivement de pénétration ; dans le dernier cas, la surface de la pièce contrôlée est recouverte d'un liquide colorant.

3. Procédé selon la revendication 1, caractérisé en ce que les défauts reproduits sont placés dans les coins du champ de contrôle de l'ordinateur, le champ de contrôle de l'ordinateur correspondant à une portion du champ de l'image de la caméra, saisie par l'ordinateur.

4. Procédé selon l'une quelconque des revendications 2 et 3, caractérisé en ce que les défauts reproduits artificiellement sont ajoutés sur un récepteur formé comme une plaque d'assise pour les pièces.

5. Procédé selon l'une quelconque des revendications 1 à 4, caractérisé en ce que dans chaque cycle de contrôle, une valeur de défaut réglée à l'avance est adaptée au niveau de l'ordinateur, à une autre valeur de l'indication de défaut, correspondant à la valeur numérique du nombre nécessaire de défauts reproduits pour un contrôle de surface, de telle sorte que toutes les zones du champ de contrôle, y compris les bordures et les parties centrales, sont contrôlées avec une sensibilité constante.

6. Procédé selon l'une quelconque des revendications 1, 2, 3 ou 4 pour un changement se produisant relativement rarement des pièces d'essais à contrôler ou pour les pièces de façon continue, caractérisé en ce que les défauts reproduits sont disposés, même à l'intérieur du champ de contrôle de l'ordinateur, et en ce que le réglage du nombre minimum de défauts soit augmenté du nombre de défauts reproduits.

7. Procédé selon l'une quelconque des revendications 1 à 6, en particulier selon la revendication 2, caractérisé en ce que les pièces d'essais à contrôler avant leur retour dans le processus d'essais de pénétration ou de poudre magnétique, sont traitées ou brossées pour faire disparaître les indications de défaut du procédé d'essais mentionné ci-dessus.

8. Procédé selon la revendication 1, caractérisé en ce que la taille, la longueur et/ou le nombre de défauts reproduits sont réglés au moyen de déplacements d'écrans (20) ou diaphragmes.

Fig.1

11

12

11

10

17

16

15

14

13

18

19

20

19b

19a

18

18a 19b 19

Fig.2

Fig.3

10

16a

18

15a

19